# EUROPÄISCHE PATENTSCHRIFT

(11) **EP 1 596 202 B1**
(45) Veröffentlichungstag und Bekanntmachung des Hinweises auf die Patenterteilung: **05.11.2008**
(21) Anmeldenummer: 05103857.8
(22) Anmeldetag: 10.05.2005
(51) Int. Cl.: G01P 3/487, H01F 13/00, G01M 1/26, G01D 5/16, G01D 5/14

(54) **Verfahren und System zum Auswuchten eines drehbaren Gegenstands**
Method and system for balancing a rotatable object
Méthode et système d'équilibrage d'un objet tournant

(30) Priorität: 14.05.2004 DE 102004024406
(43) Veröffentlichungstag der Anmeldung: 16.11.2005
(73) Patentinhaber: Schenck RoTec GmbH, 64293 Darmstadt (DE)
(72) Erfinder: Güllich, Peter, 64839, Münster (DE)
(74) Vertreter: Haar, Lucas Heinz Jörn

(56) Entgegenhaltungen:
- DE-A1- 2 839 819
- GB-A- 2 169 712
- PATENT ABSTRACTS OF JAPAN Bd. 013, Nr. 478 (P-951), 30. Oktober 1989 (1989-10-30) -& JP 01 189517 A (YAMAHA CORP), 28. Juli 1989 (1989-07-28)
- PATENT ABSTRACTS OF JAPAN Bd. 017, Nr. 184 (P-1519), 9. April 1993 (1993-04-09) -& JP 04 337401 A (MAZDA MOTOR CORP), 25. November 1992 (1992-11-25)
- PATENT ABSTRACTS OF JAPAN Bd. 012, Nr. 457 (E-688), 30. November 1988 (1988-11-30) -& JP 63 182808 A (YASKAWA ELECTRIC MFG CO LTD), 28. Juli 1988 (1988-07-28)

## Beschreibung

Die Erfindung betrifft ein Auswuchtverfahren, bei welchem zur Bestimmung von Drehwinkeln, Drehzahlen oder Drehverhalten an einem zu positionierenden drehbaren Gegenstand eine magnetische Marke angebracht wird, und ein Auswuchtsystem mit einer Vorrichtung zum Anbringen magnetischer Marken und einer Vorrichtung zur Bestimmung des Drehwinkels.

Es sind bereits Verfahren und Vorrichtungen der angegebenen Art bekannt, wobei die Marke ein gegenstandsfestes Winkelbezugssystem kennzeichnet. Derartige Verfahren und Vorrichtungen werden zum Auswuchten von Gegenständen verwendet. Der Gegenstand wird auch Rotor genannt. Derartige Marken können optischer, magnetischer oder mechanischer Natur sein. Beispielsweise wird eine Farbmarkierung am Rotor angebracht, die optische detektiert werden kann. Eine optische Marke ist in den Fällen, in denen der Rotor in einer optisch undurchlässigen oder den optischen Weg stark verändernden Umgebung gelagert ist, nicht anwendbar. Als magnetische Marken werden in der Regel kleine Permanentmagneten verwendet, die am Rotor befestigt werden. Dies führt jedoch zu einer Veränderung der Massenverteilung am Rotor und beeinflusst das Auswuchten des Rotors.

Aus der DE-AS 1 103 637 ist ein Verfahren zur Erzeugung von Rechteckspannungen für Mess- und Auswerteeinrichtungen von Auswuchtmaschinen bekannt, bei dem eine Marke eines Rotors photoelektrisch oder elektromagnetisch abgetastet wird. Aus den nadelimpulsförmigen Abtastspannungen werden zwei gegeneinander um 90° phasenverschobenen Rechteckspannungen abgeleitet, die von exakter Rechteckgestalt sind und deren Form unabhängig von der Frequenz der Nadelimpulse ist.

Aus der DE-OS 25 58 159 ist ein Verfahren zur Herstellung von örtlich begrenzten Magnetisierungen, beispielsweise für Codierzwecke in Informationsträgern, magnetischen Schlüsseln, magnetischen Identifiziereinrichtungen und dergl. sowie eine entsprechende Vorrichtung bekannt. Das in, dieser Druckschrift beschriebene Verfahren beinhaltet, dass an der zu magnetisierenden Stelle eine mit engem Radius haarnadelförmig gebogene Schleife des Leiters unter einem im Wesentlichen rechten Winkel mit ihrer Spitze auf die Oberfläche des Körpers aus magnetisierbarem Werkstoff gesetzt wird und durch Beaufschlagung mit dem Magnetisierungsstrom ein magnetischer Dipol mit sehr kleinem Polabstand in einer oberflächennahen Schicht des Körpers erzeugt wird. Hierdurch wird eine hohe Informationsdichte in dem Körper erreicht. Die Druckschrift stellt jedoch keinen Bezug zu Verfahren und Vorrichtungen zum Anbringen von magnetischen Marken an einem zu positionierenden drehbaren Gegenstand zur Bestimmung von Drehwinkeln her.

Aus DE 28 39 819 A1 ist ein Verfahren mit den Merkmalen des Oberbegriffs des Patentanspruchs 1 bekannt. Bei diesem Verfahren wird eine ferromagnetische Umlaufspur eines auszuwuchtenden Körpers zunächst entmagnetisiert oder magnetisch homogenisiert und dann an einer Stelle im Bereich der Umlaufspur mit Hilfe eines kurzzeitigen Magnetimpulses hoher Intensität eine lokal begrenzt bleibende Magnetisierung zur Bildung einer Bezugsmarke erzeugt. Das Verfahren hat den Nachteil, dass mit Hilfe der auf einer Umlaufspur befindlichen Bezugsmarke die Drehwinkellage einer Unwucht nicht unmittelbar erfasst werden kann, sondern dass zusätzlich eine die Bezugsmarke abtastende Drehwinkelmessvorrichtung erforderlich ist. Aus DE 28 39 819 A1 ist weiterhin ein System mit einer Vorrichtung zum Erzeugen einer magnetischen Bezugsmarke bekannt mit einem Elektromagneten, welcher über einen gesteuerten Schalter an einen von einer Gleichstromquelle gespeisten Speicherkondensator angeschlossen ist. Hiervon getrennt hat das System eine Abtasteinrichtung zur Abtastung der Umlaufspur und der Bezugsmarke.

In GB 2 169 712 A ist ein Verfahren und eine Einrichtung beschrieben, welches dazu dient, ein sich wiederholendes Signal von einer umlaufenden Welle zu erhalten, wobei die Wiederholungsgeschwindigkeit des Signals der Drehgeschwindigkeit der Welle proportional ist. Hierbei ist eine elektromagnetische Sonde im Abstand nahe der umlaufenden Welle angeordnet und wird für ein vorbestimmtes Intervall bei einer Wiederholungsgeschwindigkeit erregt, die gleich einem Vielfachen der Wellendrehgeschwindigkeit ist, um diskrete Magnetisierungsbereiche, deren Anzahl von der Wellendrehgeschwindigkeit abhängig ist, auf der Wellenoberfiäche aufzuzeichnen. Danach wird die Sonde nicht mehr erregt und als Sensor verwendet, um Wiedergabeimpulse abzutasten, die von dem magnetisierten Abschnitt der umlaufenden Welle erzeugt sind. Die Wiederholungsgeschwindigkeit der Wiedergabeimpulse ist ein Maß für die augenblickliche Winkelgeschwindigkeit der Welle. Eine Drehwinkelmessung ist mit dieser Einrichtung nicht möglich.

JP 01189517 A offenbart eine Einrichtung zur Messung einer Drehbewegung eines mit einer drehbaren magnetischen Spindel gekuppelten Rotors, An einer Endfläche der Spindel ist ein kreisförmiges magnetisches Muster konzentrisch zur Drehachse der Spindel ausgebildet ist. In einem definierten Abstand befindet sich vor dem magnetischen Muster ein Magnetsensor, aus dessen Signal Größe und Richtung der Drehbewegung der Spindel errechnet wird. Bei dieser bekannten Einrichtung ist eine gemessene Winkelorientierung von der Ausgangslage bei Beginn des Messvorgangs abhängig, so dass bei Entnahme der Spindel aus der Messvorrichtung drehwinkelbezogene Messergebnisse verloren gehen.

Aus JP 04 337401 A ist eine Vorrichtung zur Aufzeichnung magnetischer Signale in einer auf der Umfangsfläche einer drehbaren Welle ausgebildeten magnetischen Schicht bekannt. Zur Verhinderung einer zweifachen Aufzeichnung erfasst ein Detektor den Anfang der magnetischen Aufzeichnung unmittelbar bevor eine volle Wellenumdrehung erreicht ist.

Eine Vorrichtung zur Herstellung kleiner kreisförmiger magnetischer Codierscheiben von genügender Flussdichte ist aus JP 63 182808 A bekannt. Hierbei ist zur Magnetisierung eine stromdurchflossene Leiterschleife vorgesehen, die im Wesentlichen die Form einer liegenden Acht hat. Hierbei entsteht durch die Magnetisierung ein einziger Dipol.

Der Erfindung liegt die Aufgabe zugrunde, ein Verfahren der angegebenen Art anzugeben, welches eine berührungslose Bestimmung des Drehwinkels des zu positionierenden drehbaren Gegenstands in unterschiedlichen Umgebungen ermöglicht und gleichzeitig die Probleme einer massebehafteten Marke vermeidet. Ebenso sollten Probleme mechanisch angekoppelter Vorrichtungen zur Bestimmung von Drehwinkeln, beispielsweise verbunden mit Schlupf durch Riemenantriebe, vermieden werden.

Die Aufgabe wird nach der Erfindung durch ein Auswuchtverfahren mit den Merkmalen des Patentanspruchs 1 und durch ein Auswuchtsystem mit den Merkmalen des Patentanspruchs 3 gelöst.

Das erfindungsgemäße Auswuchtverfahren und das erfindungsgemäße Auswuchtsystem nutzen somit in vorteilhafter Weise die Eigenschaft von zu positionierenden drehbaren Gegenständen (Rotoren), aus gut magnetisierbarem Material, beispielsweise ferromagnetischem Material, zu bestehen. Hierdurch wird in sehr vorteilhafter und überraschender Weise ein Bereich des rotierenden und zu positionierenden Objekts selbst zur Marke, die zur Bestimmung von Drehwinkeln genutzt werden kann. Eine Masseveränderung des Rotors tritt dabei nicht auf. Die Marke kann ferner durch das erfindungsgemäße System in vorteilhafter Weise berührungslos detektiert werden und ermöglicht durch die Lage des Dipols die Bestimmung des Drehwinkels des Rotors, um den Rotor zum Auswuchten zu positionieren. Die Erfassung weiterer Meßwerte ist nicht erforderlich. Die Probleme in Verbindung mit Schlupf durch Riemenantriebe oder andere mechanische Vorrichtungen zur Bestimmung des Drehwinkels können daher durch das erfindungsgemäße Verfahren und die erfindungsgemäße Vorrichtung in vorteilhafter Weise vermieden werden.

Durch die in den abhängigen Ansprüchen aufgeführten Maßnahmen sind vorteilhafte Weiterbildungen und Verbesserungen der in den unabhängigen Ansprüchen angegebenen Gegenstände möglich. Besonders vorteilhaft ist, das Magnetfeld durch eine stromdurchflossene Leiterschleife zu erzeugen, da auf diese Weise die Markenform und die Feldstärke des durch die Marke erzeugten Magnetfelds durch die Parameter des Stromimpulses eingestellt werden kann.

Eine für die Detektion der magnetischen Marken vorteilhafte Ausgestaltung der erfindungsgemäßen Vorrichtung besteht darin, dass die stromdurchflossene Leiterschleife in ihrem dem zu positionierenden drehbaren Gegenstand am nächsten liegenden Ende in einer Ebene angeordnet ist, die im Wesentlichen senkrecht zur Drehachse des Gegenstands verläuft. Die erfindungsgemäße Vorrichtung kann einfach und kostengünstig realisiert werden, wenn die stromdurchflossene Leiterschleife in einer im Wesentlichen parallel zur einer Plattenflächen-Ebene verlaufenden Nut einer Keramikplatte angeordnet ist, wobei die Keramikplatte an der dem zu positionierenden drehbaren Gegenstand gegenüber liegenden Stirnseite der Vorrichtung angeordnet ist und im Wesentlichen senkrecht zur Drehachse des Gegenstands verläuft. Eine für die Bestimmung von Drehwinkeln besonders geeignete Marke an dem zu positionierenden drehbaren Gegenstand wird erzeugt, wenn die stromdurchflossene Leiterschleife im Wesentlichen die Form einer liegenden Acht einnimmt. In vorteilhafter Weise weist die Vorrichtung zum Anbringen einer magnetischen Marke außerdem eine Steuerungseinrichtung auf, welche die Impulsdauer und die Impulsform sowie die Stromstärke des durch den Leiter zur Erzeugung des Magnetfeldes fließenden Stromimpulses steuert und mit der Leiterschleife verbunden ist. Hierdurch kann der Stromimpuls, der durch die Leiterschleife fließt und die magnetische Marke im Rotor erzeugt, derart beeinflusst werden, dass entsprechend der jeweiligen Rotorform eine für die Bestimmung des Drehwinkels in Form und Magnetfeldstärke optimale Marke erzeugt wird. In besonders vorteilhafter Weise kann die stromdurchflossene Leiterschleife nach Beendigung des Auswuchtvorgangs zusätzlich zur Beseitigung der Marke verwendet werden. Hierdurch sollen möglicherweise auftretende negative Effekte des aufmagnetisierten Rotors im bestimmungsgemäßen Gebrauch des Rotors vermieden werden. Die erfindungsgemäße Weiterbildung der Vorrichtung bietet hierzu eine sehr einfache Möglichkeit. Für die Beseitigung der Marke am Rotor erzeugt die Steuerungseinrichtung in vorteilhafter Weise die zur Beseitigung der Marke erforderlichen elektrischen Wechselströme mit der erforderlichen Amplitude und Frequenz.

Das erfindungsgemäße System aus der Vorrichtung zum Anbringen magnetischer Marken und der Vorrichtung zur Bestimmung des Drehwinkels weist in vorteilhafter Weise zwei zueinander versetzt angeordnete Magnetfeldsensoren auf, aus deren Signalen eine Signalverarbeitungseinrichtung den aktuellen Drehwinkel des zu positionierenden drehbaren Gegenstands bestimmt. Die von den Magnetfeldsensoren generierten, von der Position der Marke abhängigen Signale erlauben die direkte Bestimmung des aktuellen Drehwinkels, wenn die Magnetfeldsensoren etwa um einen Drehwinkel von 90° zueinander versetzt angeordnet sind. Durch die Magnetfeldsensoren werden dann Sinus- und Kosinusfunktionen, die über die Funktion des Arcustangens (arctan) zum Drehwinkel führen, erzeugt. Eine weitere vorteilhafte Nutzung des erfindungsgemäßen Systems kann erfolgen, wenn die Vorrichtung zur Bestimmung des Drehwinkels zusätzlich eine Drehzahlbestimmungseinrichtung aufweist. Um in vorteilhafter Weise die mechanische Abnutzung der Vorrichtung zur Bestimmung des Drehwinkels und der Vorrichtung zum Anbringen einer magnetischen Marke zu minimieren, werden in vorteilhafter Weise abriebfeste keramische Materialien an der Stirnfläche der jeweiligen Vorrichtung verwendet. Die manuelle Ausrichtung der Vorrichtung zur Bestimmung des Drehwinkels wird vorteilhaft durch das Anbrin Abnehmen von Massen zur Beseitigung der Unwucht zu positionieren, wirkt das erfindungsgemäße System mit einer Einrichtung zusammen, die den auszuwuchtenden Gegenstand dreht. Das System kann in vorteilhafter Weise modular dadurch gestaltet werden, dass die Vorrichtung zum Anbringen einer magnetischen Marke abnehmbar ausgeführt ist.

Die Erfindung wird nachfolgend anhand von Ausführungsbeispielen näher erläutert, welche in Zeichnungen dargestellt sind. Es zeigen
- Figur 1: einen auszuwuchtenden Gegenstand und ein erfindungsgemäßes System aus einer erfindungsgemäßen Vorrichtung zum Anbringen einer magnetischen Marke und einer Vorrichtung zur Bestimmung des Drehwinkels in einer perspektivischen Ansicht von der Seite, schematisch,
- Figur 2: einen auszuwuchtenden Gegenstand in einer perspektivischen Ansicht von der Seite und das erfindungsgemäße System nach Figur 1 in einer perspektivischen Ansicht von der Seite, in Explosionsdarstellung und schematisch,
- Figur 3: ein erstes und
- Figur 4: ein zweites Ausführungsbeispiel für eine stromdurchflossene Leiterschleife einer erfindungsgemäßen Vorrichtung zum Anbringen einer magnetischen Marke in jeweils einer perspektivischen Ansicht von der Seite, schematisch,
- Figur 5: eine perspektivische Ansicht des Endes des auszuwuchtenden Gegenstands, welches der erfindungsgemäßen Vorrichtung zum Anbringen einer magnetischen Marke bzw. einem erfindungsgemäßen System aus einer Vorrichtung zum Anbringen einer magnetischen Marke und einer Vorrichtung zur Bestimmung des Drehwinkels gegenüber liegt, schematisch,
- Figur 6: die in den Figuren 1 und 2 dargestellte Vorrichtung zur Bestimmung des Drehwinkels eines erfindungsgemäßen Systems in Explosionsdarstellung in einer perspektivischen Ansicht von der Seite, schematisch, und
- Figur 7: eine Schaltskizze einer Vorrichtung zur Bestimmung des Drehwinkels eines erfindungsgemäßen Systems aus einer Vorrichtung zum Anbringen einer magnetischen Marke und einer Vorrichtung zur Bestimmung des Drehwinkels mit daran angeschlossenen Einrichtungen zum Drehen des auszuwuchtenden Gegenstands sowie zum Kalibrieren und Parametrisieren.

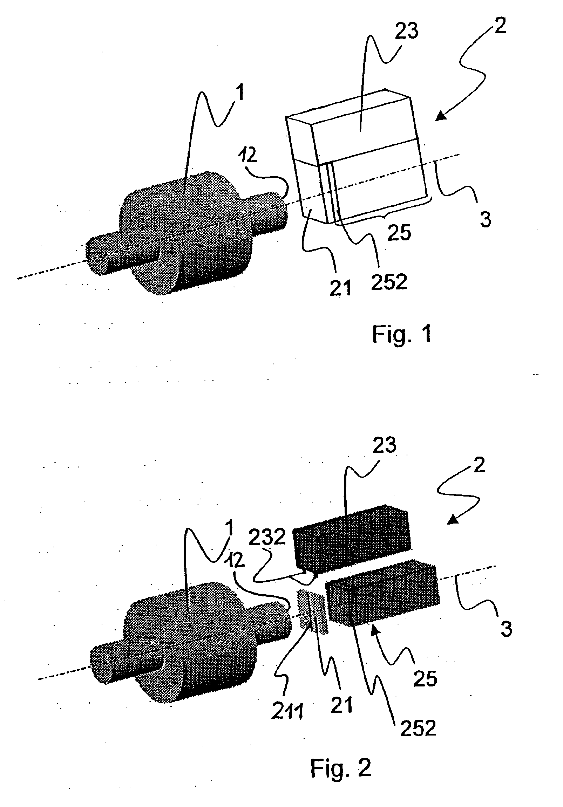

In Figur 1 ist der auszuwuchtende Gegenstand 1, auch Rotor genannt, dargestellt. Der Rotor 1 ist in einer in Figur 1 nicht gezeigten Halterung oder einer Auswuchtmaschine gelagert. Entlang der Drehachse 3 des Rotors 1 ist dem Rotor gegenüber liegend das erfindungsgemäße System 2 aus einer Vorrichtung zum Anbringen einer magnetischen Marke und der Vorrichtung zur Bestimmung des Drehwinkels 25 angeordnet. Die Vorrichtung zum Anbringen einer magnetischen Marke besteht aus einer Keramikplatte 21 mit nicht dargestellter, stromdurchflossener Leiterschleife und einer Steuerungseinrichtung 23. Die auf oder innerhalb der Keramikplatte 21 angeordnete, stromdurchflossene Leiterschleife ist elektrisch mit der Steuerungseinrichtung 23 verbunden, die zur Steuerung des durch die Leiterschleife fließenden Stromimpulses mit den Parametern Stromstärke, Impulsform und -dauer dient. Mittels der stromdurchflossenen Leiterschleife wird eine Magnetfeld erzeugt, welches in oberflächennahen Bereichen der zum System 2 weisenden Stirnfläche 12 des Rotors 1 eine Magnetisierung erzeugt. Hierzu muss diese Stirnfläche 12 aus magnetisierbarem Material, insbesondere einem ferromagnetischen Material wie Eisen, Nickel, Kobalt oder einer sogenannten Heusler'schen Legierung bestehen.

Die Stirnfläche 12 des Rotors 1 wird zur Drehwinkelbestimmung herangezogen und die in diese Stirnseite eingebrachte Magnetisierung dient als magnetische Marke zur Bestimmung dieser Drehwinkel. Diese Marke kann ferner dazu dienen, den Rotor in eine Position mit einem vorgegebenen Drehwinkel zu drehen.

Figur 1 zeigt außerdem, dass die Vorrichtung zur Bestimmung des Drehwinkels 25 an ihrer zum Rotor 1 gerichteten Stirnfläche keramisches Material 252 in Form einer Keramikplatte aufweist.

Das erfindungsgemäße System 2 ist in Figur 2 noch einmal in einer Explosionsdarstellung veranschaulicht. Es ist erkennbar, dass das System 2 modular gestaltet ist, so dass gegebenenfalls die Vorrichtung 23, 21 zum Anbringen einer magnetischen Marke ohne die Vorrichtung 25 zur Bestimmung des Drehwinkels dafür eingesetzt werden kann, lediglich die magnetische Marke an der Stirnfläche 12 des Rotors 1 aufzubringen. Zur Herstellung einer elektrischen Verbindung zwischen der Steuerungseinrichtung 23 und der stromdurchflossenen Leiterschleife der Keramikplatte 21 sind an der Steuerungseinrichtung 23 Anschlüsse 232 vorgesehen, die in nicht dargestellte Ausnehmungen der Keramikplatte 21 eingeführt werden. Da die Vorrichtung zur Bestimmung des Drehwinkels 25 unabhängig von der Vorrichtung 23, 21 zum Anbringen der magnetischen Marke verwendet werden kann, weist erstere eine Stirnfläche 252 aus keramischem Material auf, welche abriebfest ist und eine mechanische Beschädigung der Vorrichtung zur Bestimmung des Drehwinkels 25 durch den Rotor 1 minimiert. Die Keramikplatte 21 hat die Funktion, die Zerstörung der Vorrichtung zum Anbringen einer magnetischen Marke 21, 23 zu verhindern und zusätzlich die stromdurchflossene Leiterschleife von der Umgebung zu isolieren.

In Figur 2 ist außerdem zu erkennen, dass die Keramikplatte 21 eine Nut 211 aufweist, in die in einem ersten Ausführungsbeispiel die stromdurchflossene Leiterschleife in Form eines entlang der Nut verlegten Drahtes verwirklicht ist. Die stromdurchflossene Leiterschleife verläuft in diesem Fall entlang einer geraden Linie, die senkrecht auf der Drehachse 3 des Rotors 1 steht.

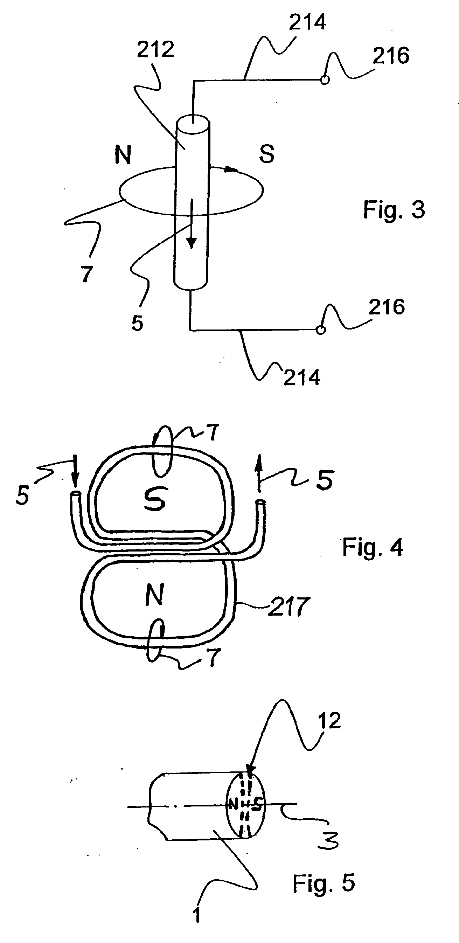

Eine derartige Leiterschleife ist in Figur 3 schematisch dargestellt. Der stromdurchflossene Leiter 212 mit einer Stromrichtung 5 erzeugt um diese Leiterschleife ein Magnetfeld, dessen Feldlinienverlauf anhand der Kreislinie 7 mit Pfeil dargestellt ist. Die Richtung des durch einen stromdurchflossenen Leiter erzeugten Magnetfelds wird durch das Biot-Savartsche-Gesetz beschrieben. Die Polarität des Magnetfeldes ist in Figur 3 anhand der Buchstaben "N" und "S" für Nord und Süd veranschaulicht. Der stromdurchflossene Leiter 212 ist mittels der Verbindungsleitungen 214 und den Anschlüssen 216 über die in den Figuren 1 und 2 dargestellte Steuerungseinrichtung 23 mit der Stromversorgung verbunden.

In Figur 4 ist ein weiteres Ausführungsbeispiel für einen stromdurchflossenen Leiter dargestellt. Der stromdurchflossene Leiter 217 hat die Form einer liegenden Acht, wobei die Stromzuführung und Stromabführung jeweils an der Mittellinie der liegenden Acht erfolgt und der Strom die beiden kreisförmigen Teile der liegenden Acht in unterschiedlicher Richtung (mit und gegen den Uhrzeigersinn) durchläuft. Entsprechend werden in den Innenräumen der beiden kreisförmigen Teile der liegenden Acht magnetische Pole mit unterschiedlicher Polarität erzeugt, welche durch die Buchstaben "S" und "N" veranschaulicht werden. Die stromdurchflossenen Leiter 212 und 217 können in die Keramikplatte 21 eingebettet oder mindestens teilweise auf der Oberfläche dieser Keramikplatte 21 angeordnet sein. Hierfür kann die Keramikplatte 21 eine entsprechend gestaltete Aussparung oder Nut aufweisen. Im Falle der Ausführung des stromdurchflossenen Leiters in der Form der liegenden Acht ist diese hierbei derart in der Nut angeordnet, dass der Steg der Acht dem Verlauf der Nut folgt. Die den stromdurchflossenen Leiter 212 und 217 aufnehmende Keramikplatte 21 ist in einem bevorzugten Ausführungsbeispiel aus einem Satz mit unterschiedlichen, jeweils Rotordurchmesserbereichen zugeordneten Plattengrößen auswählbar.

Figur 5 zeigt die magnetische Marke an der Stirnfläche 12 der Achse des Rotors 1. Durch das Magnetfeld des stromdurchflossenen Leiters der beschriebenen Vorrichtung zum Anbringen einer magnetischen Marke wurde in den oberflächennahen Bereichen der Stirnfläche 12 ein magnetischer Dipol, gekennzeichnet durch die Polaritäten in "N" und "S", rotationssymmetrisch aufmagnetisiert. Der Übergangsbereich zwischen den magnetischen Polen bildet eine schmale Linie, die in Figur 5 durch gestrichelte Grenzlinien veranschaulicht ist und die Drehachse 3 kreuzt. Die aufmagnetisierte Marke kann anschließend zur Bestimmung des Drehwinkels des Rotors 1 dienen. Eine Masseänderung des Rotors erfolgte durch den Vorgang der Aufmagnetisierung nicht. Es kann somit das Auswuchten des Rotors im Folgenden durchgeführt werden, ohne dass eine Masseänderung des Rotors berücksichtigt werden muss. Hierbei kann die Position der magnetischen Marke durch eine berührungslos arbeitende Sensortechnik, die in der Vorrichtung zur Bestimmung des Drehwinkels 25 angeordnet ist, bestimmt werden.

In einem weiteren Ausführungsbeispiel kann die magnetische Marke analog zu dem vorstehend erläuterten Verfahren mittels eines Permanentmagneten statt eines stromdurchflossenen Leiters erzeugt werden. Da jedoch mit einem stromdurchflossenen Leiter eine höhere und variierbare Magnetfeldstärke erreichbar ist, wird dieses Verfahren in der Anwendung bevorzugt.

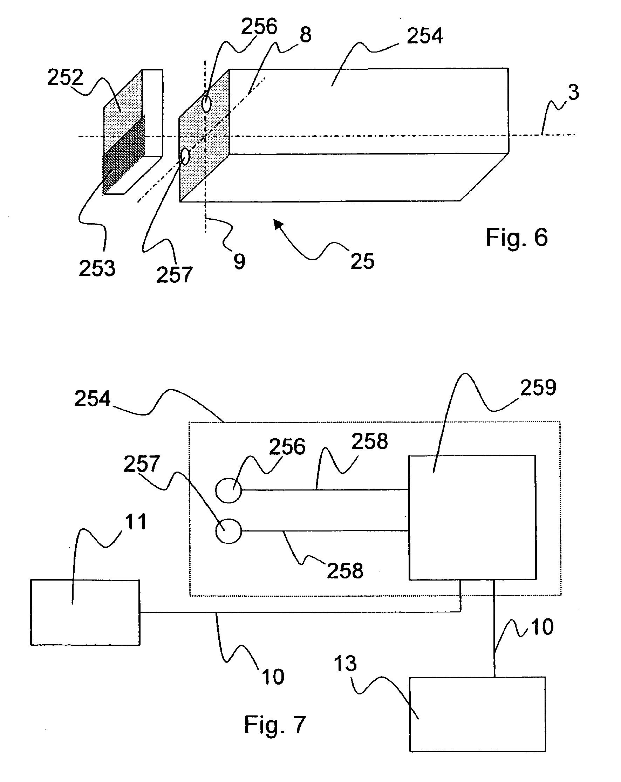

Anhand der Figuren 6 und 7 soll den Aufbau und die Funktionsweise der Vorrichtung zur Bestimmung des Drehwinkels näher erläutert werden. Figur 6 zeigt die Vorrichtung zur Bestimmung des Drehwinkels 25 in einer Explosionsdarstellung mit der Keramikplatte 252 und der Signalempfangs- und -verarbeitungseinrichtung 254. Die Keramikplatte 252 ist vor der dem Rotor zugewandten Seite der Signalempfangs- und -verarbeitungseinrichtung 254 angeordnet und weist einen Bereich aus farblich verändertem keramischen Material 253 auf. Die Grenzlinie zwischen den Bereichen unterschiedlicher Farbe liegt auf der Mittellinie und ist eine sichtbare Markierung. Sie dient zur manuellen Ausrichtung der Vorrichtung gegenüber dem Rotor.

Die Magnetfeldsensoren 256 und 257 sind entlang der Mittellinien 8 und 9 der in Richtung Rotor zeigenden Stirnfläche der Signalempfangs- und -verarbeitungseinrichtung 254 angeordnet, wobei der erste Magnetfeldsensor 256 unter einem Winkel von 90° versetzt zum zweiten Magnetfeldsensor 257 angeordnet ist. Die Magnetfeldsensoren sind vorzugsweise magnetoresistive Sensoren mit hoher Empfindlichkeit. In einem weiteren Ausführungsbeispiel können die Magnetfeldsensoren auch als Hall-Sensoren ausgebildet sein.

Wie in Figur 7 dargestellt, sind die Magnetfeldsensoren 256 und 257 über Verbindungsleitungen 258 mit der Signalverarbeitungseinrichtung 259 verbunden. Die durch die Versetzung der Magnetfeldsensoren 256 und 257 um 90° erzeugten analogen Sinus- und Kosinussignale werden durch die Signalverarbeitungseinrichtung 259 zunächst in einer Verstärker- und Abgleichstufe verstärkt. Anschließend werden durch einen bekannten Interpolations-ASIC digitale Inkrementalsignale erzeugt, die direkt den aktuellen Drehwinkel des Rotors repräsentieren. Hierbei erfolgt durch den Interpolations-ASIC eine Korrektur von Offset, Amplitude oder Phasenverschiebung zwischen Sinus- und Kosinussignal in kleinen Grenzen automatisch. Eine grobe Parametrisierung oder Kalibrierung kann durch eine Kalibrier- und Parametrisiereinrichtung 13, beispielsweise einen Laptop, der über eine Verbindungsleitung 10 mit der Signalverarbeitungseinrichtung 259 verbunden ist, vorgenommen werden. Die Signalverarbeitungseinrichtung 259 ist über eine Verbindungsleitung 10 ferner verbunden mit einer Einrichtung zum Drehen des auszuwuchtenden Gegenstands 11. Mittels dieser Dreheinrichtung 11 kann der auszuwuchtende Gegenstand gesteuert durch die Vorrichtung zur Bestimmung des Drehwinkels 25 in eine Position mit einem bestimmten Drehwinkel bewegt werden. In einer derartigen Position kann durch Hinzufügen oder Abnehmen von Masse an dem Rotor 1 dieser ausgewuchtet werden.

In einem weiteren Ausführungsbeispiel kann mittels der Signalverarbeitungseinrichtung 259 aus den von den Magnetfeldsensoren 256 und 257 erhaltenen Sinus- und Kosinussignalen die Drehzahl des Rotors 1 bestimmt werden. Außerdem kann das Drehverhalten erfasst werden.

## Patentansprüche

1. Auswuchtverfahren, bei welchem zur Bestimmung von Drehwinkeln, Drehzahlen oder Drehverhalten an einem für das Auswuchten zu positionierenden, um eine Achse drehbaren Gegenstand, in einem für die Drehwinkelbestimmung geeigneten, aus magnetisierbarem Material bestehenden Bereich des Gegenstands, durch ein Magnetfeld als magnetische Marke ein magnetischer Dipol erzeugt wird, wobei mittels dieser Marke der Drehwinkel der Auswuchtposition bestimmt wird, **dadurch gekennzeichnet, dass** eine Vorrichtung zur Erzeugung eines Magnetfelds an einer Stirnfläche des drehbaren Gegenstands angeordnet wird und in dem oberflächennahen Bereich der Stirnfläche ein einziger magnetischer Dipol erzeugt wird, dessen Pole zur Drehachse des Gegenstands rotationssymmetrisch sind.

2. Verfahren nach Anspruch 1, **dadurch gekennzeichnet, dass** das Magnetfeld durch eine stromdurchflossene Leiterschleife erzeugt wird.

3. Auswuchtsystem mit einer Vorrichtung zum Anbringen einer magnetischen Marke zur Bestimmung von Drehwinkeln an einem für das Auswuchten zu positionierenden drehbaren Gegenstand (1), wobei die Vorrichtung Mittel zur Erzeugung eines magnetischen Dipols in einem für die Drehwinkelbestimmung vorgesehen, magnetisierbaren Bereich (12) des drehbaren Gegenstands (1) aufweist, und aus einer Vorrichtung zur Bestimmung des Drehwinkels (25), und mit einer Einrichtung, die das Drehen des Gegenstands in die Auswuchtposition gestattet, **dadurch gekennzeichnet, dass** die Vorrichtung zum Anbringen einer magnetischen Marke zur Erzeugung eines zur Drehachse des drehbaren Gegenstands (1) rotationssymmetrischen magnetischen Dipol an einer Stirnfläche des drehbaren Gegenstands ausgebildet ist und, von dem drehbaren Gegenstand (1) aus in Richtung der Drehachse (3) gesehen, vor der Vorrichtung zur Bestimmung des Drehwinkels (25) angeordnet ist.

4. System nach Anspruch 3, **dadurch gekennzeichnet, dass** als Mittel zur Erzeugung eines Magnetfelds eine stromdurchflossene Leiterschleife dient.

5. System nach Anspruch 4, **dadurch gekennzeichnet, dass** die stromdurchflossene Leiterschleife in ihrem dem zu positionierenden drehbaren Gegenstand (1) am nächsten liegenden Ende in einer im Wesentlichen senkrecht zur Drehachse (3) des Gegenstands verlaufenden Ebene angeordnet ist.

6. System nach einem der Ansprüche 4 oder 5, **dadurch gekennzeichnet, dass** die stromdurchflossene Leiterschleife in einer im Wesentlichen parallel zur einer Plattenflächen-Ebene verlaufenden Nut (211) einer Keramikplatte (21) angeordnet ist, wobei die Keramikplatte (21) an der dem Gegenstand gegenüber liegenden Stirnseite der Vorrichtung angeordnet ist und im Wesentlichen senkrecht zur Drehachse (3) des zu positionierenden drehbaren Gegenstands verläuft.

7. System nach einem der Ansprüche 5 oder 6, **dadurch gekennzeichnet, dass** die stromdurchflossene Leiterschleife im Wesentlichen die Form einer liegenden Acht einnimmt.

8. System nach einem der Ansprüche 4 bis 7, **dadurch gekennzeichnet, dass** die Vorrichtung eine Steuerungseinrichtung (23) aufweist, welche die Impulsdauer und die Impulsform sowie die Stromstärke des durch den Leiter zur Erzeugung des Magnetfeldes fließenden Stromimpulses steuert und mit der Leiterschleife verbunden ist.

9. System nach einem der Ansprüche 4 bis 8, **dadurch gekennzeichnet, dass** die Steuerungseinrichtung (23) so ausgebildet ist, dass zur Beseitigung der magnetischen Marke erforderliche elektrische Wechselströme mit der erforderlichen Amplitude und Frequenz erzeugt werden können.

10. System nach einem der Ansprüche 3 bis 9, **dadurch gekennzeichnet, dass** die Vorrichtung zur Bestimmung des Drehwinkels (25) zwei im Abstand von einer der Drehachse (3) des drehbaren Gegenstands (1) entsprechenden Messachse und in Drehrichtung bezogen auf die Messachse zueinander versetzt angeordnete Magnetfeldsensoren (256, 257) aufweist, aus deren Signalen eine Signalverarbeitungseinrichtung (254) den aktuellen Drehwinkel des zu positionierenden drehbaren Gegenstands (1) bestimmt.

11. System nach Anspruch 10, **dadurch gekennzeichnet, dass** die beiden Magnetfeldsensoren (256, 257) etwa um einen Drehwinkel von 90° bezogen auf die Messachse zueinander versetzt angeordnet sind.

12. System nach einem der Ansprüche 3 bis 11, **dadurch gekennzeichnet, dass** die Vorrichtung zur Bestimmung des Drehwinkels (25) zusätzlich Mittel zur Bestimmung der Drehzahl aufweist.

13. System nach einem der Ansprüche 3 bis 12, **dadurch gekennzeichnet, dass** die zum Gegenstand (1) gerichteten Stirnfläche der Vorrichtung zur Bestimmung des Drehwinkels (25) aus einem keramischen Material besteht.

14. System nach einem der Ansprüche 3 bis 13, **dadurch gekennzeichnet, dass** die zum Gegenstand (1) gerichtete Stirnfläche der Vorrichtung zur Bestimmung des Drehwinkels (25) eine sichtbare Markierung zur manuellen Ausrichtung dieser Vorrichtung aufweist.

15. System nach einem der Ansprüche 3 bis 14, **gekennzeichnet durch** eine Einrichtung, **durch** die der Gegenstand (1) in einen vorgegebenen Dehwinkel drehbar ist.

16. System nach einem der Ansprüche 3 bis 15, **dadurch gekennzeichnet, dass** die Vorrichtung zum Anbringen einer magnetischen Marke abnehmbar ist.

## Claims

1. Balancing method, in which a magnetic dipole is generated by a magnetic field as a magnetic mark for determining angles of rotation, rotational speeds or rotational properties, on an article which is to be positioned for balancing and which is rotatable about an axis, in a region of the article which is made of a magnetisable material and which is suitable for determining the angle of rotation, the angle of rotation of the balancing position being determined by means of this mark, **characterised in that** a device for generating a magnetic field is arranged on an end face of the rotatable article, and a single magnetic dipole, the poles of which are arranged rotationally symmetrically about the axis of rotation of the article, is generated in the region near the surface of the end face.

2. Method according to claim 1, **characterised in that** the magnetic field is generated by a current-carrying conductor loop.

3. Balancing system comprising a device for applying a magnetic mark, for determining angles of rotation, to a rotatable article (1) to be positioned for balancing, the device comprising means for generating a magnetic dipole in a magnetisable region (12) of the rotatable article (1) provided for determining angles of rotation, as well as a device for determining the angle of rotation (25), and comprising a means which allows the rotation of the article in the balanced position, **characterised in that** the device for applying a magnetic mark is formed on an end face of the rotatable article so as to generate a magnetic dipole which is rotationally symmetrical about the axis of rotation of the rotatable article (1), and, as seen from the rotatable article (1) in the direction of the axis of rotation (3), is arranged before the device for determining the angle of rotation (25).

4. System according to claim 3, **characterised in that** a current-carrying conductor loop is used as the means for generating a magnetic field.

5. System according to claim 4, **characterised in that** the current-carrying conductor loop is arranged, in the end thereof which is closest to the rotatable article (1) to be positioned, in a plane extending substantially perpendicular to the axis of rotation (3) of the article.

6. System according to either claim 4 or claim 5, **characterised in that** the current-carrying conductor loop is arranged in a groove (211), extending substantially parallel to a plate surface plane, in a ceramic plate (21), the ceramic plate (21) being arranged at the end face of the device opposing the article and extending substantially perpendicular to the axis of rotation (3) of the rotatable article to be positioned.

7. System according to either claim 5 or claim 6, **characterised in that** the current-carrying conductor loop substantially assumes the shape of a horizontal eight.

8. System according to any one of claims 4 to 7, **characterised in that** the device comprises a controller (23), which controls the pulse duration and the pulse shape, as well as the current strength of the current pulse which flows through the conductor to generate the magnetic field, and is connected to the conductor loop.

9. System according to any one of claims 4 to 8, **characterised in that** the controller (23) is formed in such a way that the electrical alternating currents, with the necessary amplitude and frequency, required for eliminating the mark can be generated.

10. System according to any one of claims 3 to 9, **characterised in that** the device for determining the angle of rotation (25) comprises two magnetic field sensors (256, 257), which are at a distance from a measurement axis corresponding to the axis of rotation (3) of the rotatable article (1) and are arranged so as to be mutually offset in the direction of rotation based on the measurement axis, and from the signals of which sensors a signal processing device (254) determines the current angle of rotation of the rotatable article (1) to be positioned.

11. System according to claim 10, **characterised in that** the two magnetic field sensors (256, 257) are mutually offset approximately by an angle of rotation of 90° based on the measurement axis.

12. System according to any one of claims 3 to 11, **characterised in that** the device for determining the angle of rotation (25) also comprises means for determining the rotational speed.

13. System according to any one of claims 3 to 12, **characterised in that** the end face, which is directed towards the article (1), of the device for determining the angle of rotation (25) is made of a ceramic material.

14. System according to any one of claims 3 to 13, **characterised in that** the end face, which is directed towards the article (1), of the device for determining the angle of rotation (25) has a visible marking for manual orientation of this device.

15. System according to any one of claims 3 to 14, **characterised by** a means which allows the article (1) to be rotated to a predetermined angle of rotation.

16. System according to any one of claims 3 to 15, **characterised in that** the device for applying a magnetic mark is detachable.

## Revendications

1. Procédé d'équilibrage, dans lequel, pour déterminer les angles de rotation, les vitesses de rotation ou le comportement de rotation d'un objet rotatif autour d'un axe et devant être positionné pour l'équilibrage, un dipôle magnétique est généré par un champ magnétique sous la forme d'un repère magnétique dans une zone de l'objet appropriée à la détermination de l'angle de rotation et réalisée dans un matériau magnétisable, l'angle de rotation de la position d'équilibrage étant déterminé au moyen de ce repère, **caractérisé en ce qu'**un dispositif pour générer un champ magnétique est disposé sur une face frontale de l'objet rotatif, et dans la zone de la face frontale, proche de la surface, un seul dipôle magnétique est généré dont les pôles sont disposés selon une symétrie de révolution par rapport à l'axe de rotation de l'objet.

2. Procédé selon la revendication 1, **caractérisé en ce que** le champ magnétique est généré par une boucle conductrice traversée par un courant.

3. Système d'équilibrage, comportant un dispositif pour appliquer un repère magnétique afin de déterminer les angles de rotation sur un objet (1) rotatif devant être positionné pour l'équilibrage, le dispositif comportant des moyens pour générer un dipôle magnétique dans une zone (12) magnétisable de l'objet (1) rotatif prévue pour la détermination de l'angle de rotation, et comportant un dispositif pour déterminer l'angle de rotation (25) et un dispositif premettant de faire tourner l'objet dans la position d'équilibrage, **caractérisé en ce que** le dispositif pour appliquer un repère magnétique est réalisé pour générer sur une face frontale de l'objet rotatif un dipôle magnétique présentant une symétrie de révolution par rapport à l'axe de rotation de l'objet (1) rotatif, et est disposé, selon une observation depuis l'objet (1) rotatif dans la direction de l'axe de rotation (3), devant le dispositif pour déterminer l'angle de rotation (25).

4. Système selon la revendication 3, **caractérisé en ce qu'**une boucle conductrice traversée par un courant est utilisée comme moyens pour générer un champ magnétique.

5. Système selon la revendication 4, **caractérisé ce que** la boucle conductrice traversée par un courant, dans son extrémité située au plus près de l'objet (1) rotatif à positionner, est disposée dans un plan sensiblement perpendiculaire à l'axe de rotation (3) de l'objet.

6. Système selon la revendication 4 ou 5, **caractérisé en ce que** la boucle conductrice traversée par un courant est disposée dans une rainure (211) d'une plaque en céramique (21), ladite rainure étant sensiblement parallèle à un plan de la surface de la plaque, ladite plaque en céramique (21) étant disposée sur la face frontale du dispositif, située en face de l'objet et s'étendant sensiblement perpendiculairement à l'axe de rotation (3) de l'objet rotatif à positionner.

7. Système selon la revendication 5 ou 6, **caractérisé en ce que** la boucle conductrice traversée par un courant épouse sensiblement la forme d'un huit couché.

8. Système selon l'une quelconque des revendications 4 à 7, **caractérisé en ce que** le dispositif comporte un dispositif de commande (23) qui commande la durée d'impulsion et la forme de l'impulsion, ainsi que l'intensité du courant de l'impulsion de courant traversant la boucle pour générer le champ magnétique et qui est relié à la boucle conductrice.

9. Système selon l'une des revendications 4 à 8, **caractérisé en ce que** le dispositif de commande (23) est conçu de telle sorte que des courants électriques alternatifs nécessaires pour éliminer le repère magnétique peuvent être générés avec l'amplitude et la fréquence nécessaires.

10. Système selon l'une des revendications 3 à 9, **caractérisé en ce que** le dispositif pour déterminer l'angle de rotation (25) comporte deux capteurs de champ magnétique (256, 257) situés à distance d'un axe de mesure correspondant à l'axe de rotation (3) de l'objet (1) rotatif et qui sont décalés l'un par rapport à l'autre dans le sens de rotation par rapport à l'axe de mesure, à partir des signaux desquels un dispositif de traitement de signaux (254) détermine l'angle de rotation actuel de l'objet (1) rotatif à positionner.

11. Système selon la revendication 10, **caractérisé en ce que** les deux capteurs de champ magnétique (256, 257) sont décalés l'un par rapport à l'autre par rapport à l'axe de mesure d'un angle de rotation de 90°.

12. Système selon l'une des revendications 3 à 11, **caractérisé en ce que** le dispositif pour déterminer l'angle de rotation (25) comporte, en plus, des moyens pour déterminer la vitesse de rotation.

13. Système selon l'une des revendications 3 à 12, **caractérisé en ce que** la face frontale du dispositif pour déterminer l'angle de rotation (25) qui est orientée vers l'objet (1) est réalisée dans un matériau céramique.

14. Système selon l'une des revendications 3 à 13, **caractérisé en ce que** la face frontale du dispositif pour déterminer l'angle de rotation (25) qui est orientée vers l'objet (1) comporte un repère visible pour l'orientation manuelle de ce dispositif.

15. Système selon l'une des revendications 3 à 14, **caractérisé par** un dispositif à l'aide duquel l'objet (1) peut être tourné dans un angle de rotation prédéfini.

16. Système selon l'une des revendications 3 à 15, **caractérisé en ce que** le dispositif pour appliquer un repère magnétique est amovible.
